# EUROPÄISCHE PATENTSCHRIFT

(11) **EP 0 624 430 B1**
(45) Veröffentlichungstag und Bekanntmachung des Hinweises auf die Patenterteilung: **28.02.1996**
(21) Anmeldenummer: 94104646.8
(22) Anmeldetag: 24.03.1994
(51) Int. Cl.: B23Q 16/00, B23D 59/00, B27B 27/02

(54) **Werkstück-Anlage für Werkzeugmaschinen**
Workpiece support for a machine-tool
Installation pour des pièces dans une machine-outil

(30) Priorität: 14.05.1993 DE 9307328 U
(43) Veröffentlichungstag der Anmeldung: 17.11.1994
(73) Patentinhaber: Wilhelm Altendorf GmbH & Co. KG, D-32429 Minden (DE)
(72) Erfinder: Thiele, Siegfried, D-32429 Minden (DE); Sensmeier, Jürgen, D-32584 Löhne (DE)
(74) Vertreter: Eisenführ, Speiser & Partner

(56) Entgegenhaltungen:
- WO-A-91/00162
- WO-A-93/07983
- CH-A- 361 659
- CH-A- 470 946
- CH-A- 602 274
- CH-A- 605 024
- DE-U- 9 114 150
- DE-U- 9 202 908
- GB-A- 2 135 630
- US-A- 4 600 184

## Beschreibung

Die Erfindung betrifft eine Werkstück-Anlage für Werkzeugmaschinen, insbesondere einen Rechtsanschlag für Formatkreissägen mit schwenkbarem Sägeblatt, die eine parallel zu einer Werkzeugebene angeordnete Anschlagschiene aufweist, welche lösbar an einem quer zur Werkzeugebene am Maschinengestell verfahr- und feststellbaren Support in einer von zwei zueinander um 90° um die Schienenlängsachse verschwenkten Lagen befestigbar ist, wobei die Anschlagschiene in einer ersten Lage dem Werkzeug eine Anschlagleiste von geringerer Höhe und in einer zweiten Lage eine Anschlagleiste von demgegenüber größerer Höhe zuwendet, und wobei ein erster Anschlag am Maschinengestell mit einem Gegenanschlag am Support zusammenwirkt, um die Annäherung des Supports an das Werkzeug zu begrenzen. Eine solche Werkstück-Anlage ist aus dem Dokument GB-A-2 135 630 bekannt.

Mit Hilfe sogenannter Anschläge werden Werkstücke auf Werkzeugmaschinen positioniert, um exakte Bearbeitungen ausführen zu können. Bei einigen Formatkreissägen kann das Sägeblatt verschwenkt werden, um Längsschnitte in einem bestimmten Winkel ausführen zu können.

Bei derartigen Schnitten werden die zu bearbeitenden Rohlinge am sogenannten Rechts- oder Parallelanschlag zur Anlage gebracht, dessen Abstand zur Werkzeugebene variiert werden kann. Kommen in unterschiedlichen Lagen am Support befestigbare Anschlagschienen zum Einsatz, die nach berufsgenossenschaftlicher Vorschrift je nach Lage unterschiedlich hohe Anschlagleisten bereitstellen, um auch bei geschwenktem Sägeblatt schmale Werkstücke schneiden zu können, so tritt die Schwierigkeit auf, die Annäherung des Supports mit der in ihren beiden Lagen unterschiedlich breiten Anschlagschienen in unterschiedlichen Abständen des Supports vom Werkzeug zu begrenzen, um eine Berührung zwischen Anschlagschiene und Werkzeug in jeder Lage der Anschlagschiene zu verhindern und einen Mindestabstand der Anschlagschiene von beispielsweise 2 mm zum Werkzeug zu gewährleisten.

Der Erfindung liegt das Problem zugrunde, eine Werkstück-Anlage der eingangs genannten Art bereitzustellen, bei dem die Annäherung des Supports und somit der Anschlagschiene an das Werkzeug in beiden Lagen der Anschlagschiene auf besonders sichere und einfache Weise begrenzt wird.

Das Problem wird bei einer Werkstückanlage der eingangs genannten Art erfindungsgemäß dadurch gelöst, daß am Maschinengestell ein zweiter Anschlag in anderem Abstand vom Werkzeug angeordnet ist und, daß die zwei Anschläge mit dem in Abhängigkeit von der Lage der Anschlagschiene auf jeweils einen der Anschläge eingestellten Gegenanschlag am Support zusammenwirken.

Auf diese Weise wird in jeder Lage der Anschlagschiene automatisch derjenige Anschlag am Maschinengestell aktiviert, der sicherstellt, daß die Annäherung der Anschlagschiene an das Werkzeug auf den Mindestabstand begrenzt ist.

Eine besonders vorteilhafte Ausführungsform der Erfindung besteht darin, daß der Gegenanschlag aus einem am Support beweglich gelagerten Teil besteht, welches in der ersten Lage der Anschlagschiene eine erste Lage einnimmt, in der es zum Zusammenwirken mit dem vom Werkzeug weiter entfernten Anschlag eingestellt ist, während es in der zweiten Lage der Anschlagschiene eine zweite Lage einnimmt, in der es mit dem anderen Anschlag zusammenwirkt, der einen geringeren Abstand vom Werkzeug hat. Der Vorteil besteht in der in dem besonders einfachen Aufbau des Gegenanschlages in Form eines am Support beweglich gelagerten Teils.

Eine rein mechanische Weiterbildung der Erfindung sieht einen Anschlag vor, bei dem die Anschlagschiene an zwei ihrer Seitenflächen T-förmige Nuten zur Befestigung der Anschlagschiene am Support aufweist und bei dem der Gegenanschlag ein am Support um eine horizontale Achse frei drehbar außermittig gelagerter Riegel ist, der in der zweiten Lage der Anschlagschiene aufgrund der Schwerkraft teilweise in eine der T-förmigen Nuten derart eintaucht, daß er am weiter entfernten Anschlag vorbei zum demgegenüber seitlich verstaffelt angeordneten Anschlag gelangen kann, während der Riegel in der ersten Lage der Anschlagschiene von dieser in seine erste Stellung verschwenkt ist, in der er mit dem weiter entfernten Anschlag zusammenwirkt.

Gemäß einer alternativen Ausführungsform der Erfindung kann der Gegenanschlag mit Hilfe eines Elektromotors zur Aktivierung einer der Anschläge verfahren werden, indem dieser durch Signale eines elektro-mechanischen Sensors gesteuert wird, der in Abhängigkeit von der Lage der Anschlagschiene unterschiedliche Signale bereitstellt.

Ein besonders großer Bedienungskomfort wird mit einer Ausführungsform erreicht, bei der eine elektronische Meß- und Anzeigeeinheit die Relativstellung des Support in bezug auf das Maschinengestell ermittelt und der Wert des Abstandes der Anlageleiste vom Werkzeug angezeigt wird, und bei der ein elektro-mechanischer Sensor entsprechend der jeweiligen Lage der Anschlagschiene unterschiedliche Signale bereitstellt und an die Meß- und Anzeigeeinheit liefert, von der unter Berücksichtigung einer Änderung des Abstandes der Anschlagleiste vom Support bei Änderung der Lage der Anschlagschiene der tatsächliche Abstandswert der Anschlagleiste vom Werkzeug angezeigt wird. Bei einer Veränderung der Lage der Anschlagschiene wird also automatisch der tatsächliche Abstand der Anschlagleiste vom Werkzeug angezeigt.

Vorteilhafterweise können die Anschläge am Maschinengestell verstellt werden, um sie im Einzelfall exakt zu justieren.

Im folgenden wird ein bevorzugtes Ausführungsbeispiel der vorliegenden Erfindung unter Bezugnahme auf die beiliegenden Zeichnungen beschrieben. Es zeigen:
- Figur 1: einen Rechtsanschlag einer Formatkreissäge mit einer an einem Support in einer ersten Lage befestigten Anschlagschiene und einem drehbar am Support gelagerten Gegenanschlag in Seitenansicht und Draufsicht;
- Figur 2: den Rechtsanschlag aus Figur 1, bei dem die Anschlagschiene in einer zweiten Lage am Support befestigt ist in Seitenansicht und Draufsicht;
- Figur 3: eine in Figur 1 mit A gekennzeichnete Seitenansicht des Rechtsanschlags; und
- Figur 4: eine in Figur 2 mit B gekennzeichnete Seitenansicht des Rechtsanschlags.

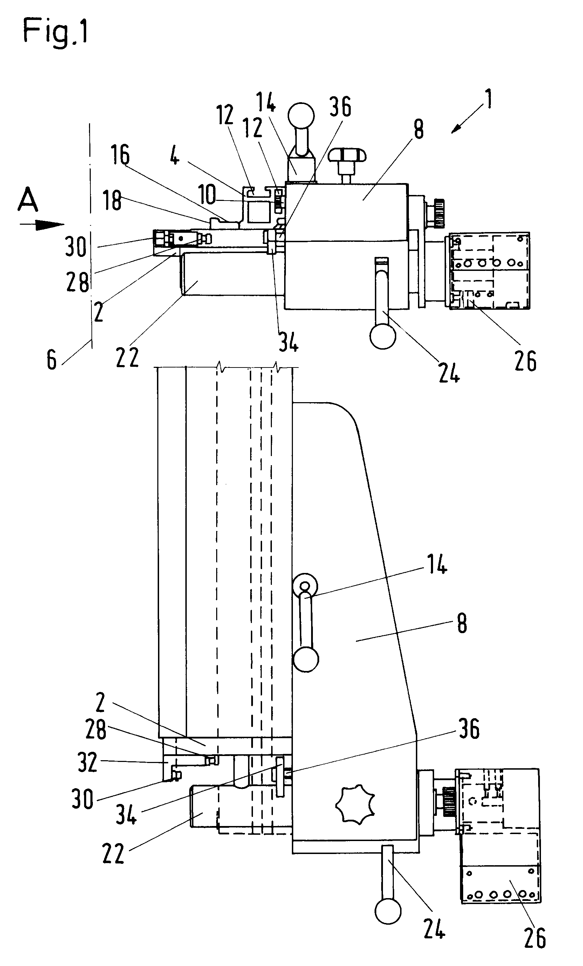

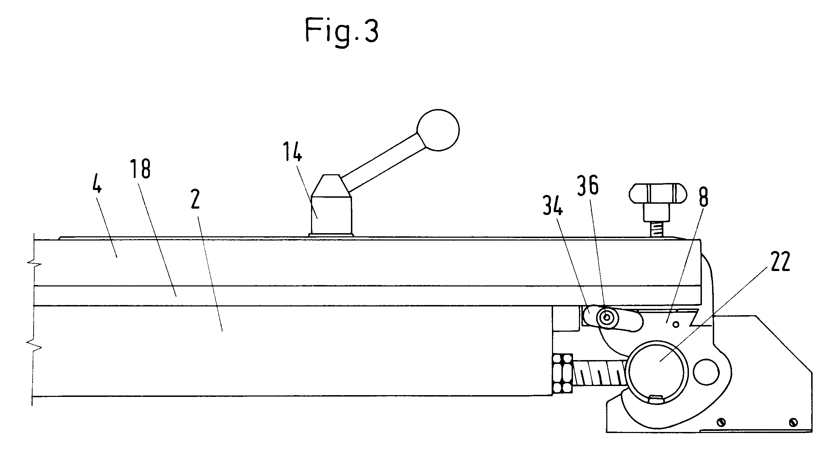

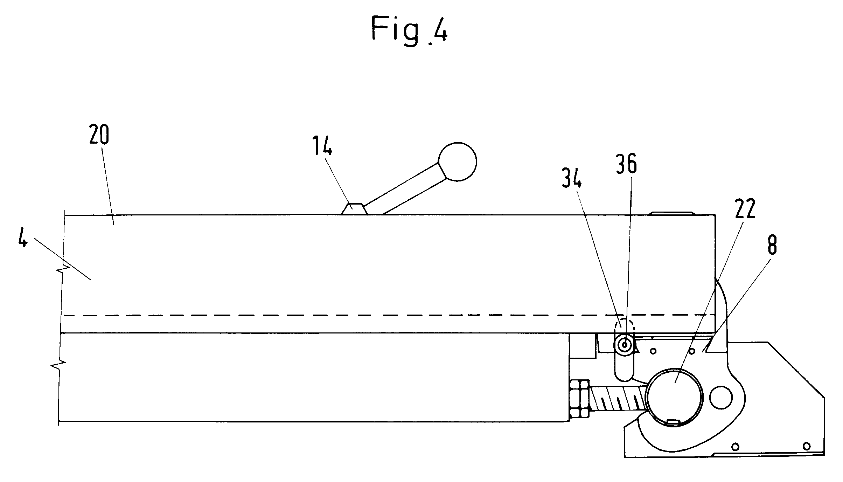

Der in den Figuren 1 bis 4 dargestellte Anschlag ist ein Rechts- oder Parallelanschlag einer Formatkreissäge, welche ein nicht dargestelltes schwenkbares Sägeblatt aufweist, das teilweise aus einem Spalt zwischen einem Maschinengestell 2 und einem nicht dargestellten Rollwagen ragt. Eine Anschlagschiene 4 ist parallel zu einer Werkzeugebene 6 angeordnet, die durch das Sägeblatt in seiner unverschwenkten Lage definiert ist. Die als Hohlprofil ausgebildete Anschlagschiene liegt auf der ebenen Oberseite des Maschinengestells 2 auf und ist an einem Support 8 befestigt, in dem sie von mindestens einem horizontal am Support 8 gehalterten Spannbolzen 10, der mit seinem Bolzenkopf mit einer T-förmigen Nut 12 in Eingriff steht, an den Support 8 herangezogen wird. Der Spannbolzen 10 kann mit Hilfe einer Klemmeinrichtung 14 vorgespannt oder gelöst werden.

Die Anschlagschiene 4 weist an zwei ihrer Seitenflächen T-förmige Nuten 12 auf, welche zur Befestigung der Anschlagschiene 4 am Support 8 verwendet werden können. Die Anschlagschiene 4 besteht aus einem Profil mit im wesentlichen quadratischem Querschnitt, bei dem als Verlängerung einer Seitenfläche ein flacher Ansatz 16 angeformt ist.

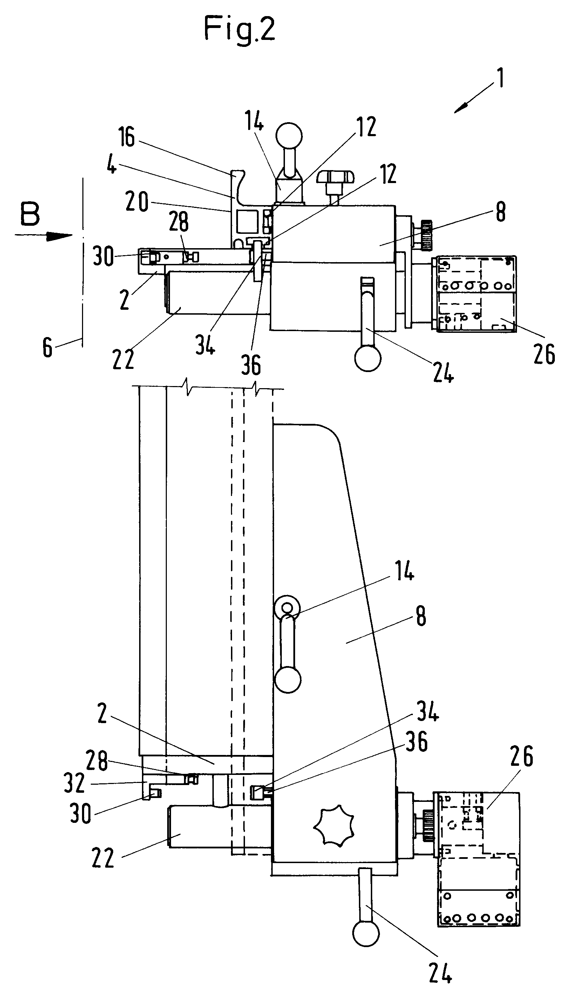

In Figur 1 ist die Anschlagschiene 4 in einer ersten Lage, in der der Ansatz 16 auf dem Maschinengestell 2 aufliegt und in der dem Werkzeug eine Anschlagleiste 18 von geringer Höhe zuwendet, am Support befestigt. Die Höhe dieser Anschlagleiste 18 entspricht der Breite des Ansatzes 16 an dessen freiem Ende. Wie aus Figur 2 ersichtlich ist, ist die Anschlagschiene 4 in einer gegenüber der ersten Lage (Figur 1) um 90° um die Schienenlängsachse verschwenkten zweiten Lage am Support 8 befestigbar, in der die Anschlagschiene 4 dem Werkzeug eine Anschlagleiste 20 von gegenüber der Anschlagleiste 18 größerer Höhe zuwendet. In diesem Ausführungsbeispiel betragen die Höhe der dem Werkzeug in der ersten Lage der Anschlagschiene zugewandten Anschlagleiste etwa 15 mm, der Abstand dieser Anschlagleiste vom Support 94 mm, die Höhe der Anschlagleiste in der zweiten Lage ebenfalls 94 mm und der Abstand dieser Anschlagleiste vom Support 51,5 mm. Der Unterschied des Abstandes der Anschlagleiste vom Support in der ersten Lage der Anschlagschiene vom gleichen Abstand in der zweiten Lage beträgt folglich 42,5 mm.

Der Support 8 ist dadurch quer zur Werkzeugebene am Maschinengestell 2 gelagert, daß er eine starr mit dem Maschinengestell 2 verbundene Stange 22 umschließt. Mit Hilfe eines Klemm-Mittels 24 ist der Support 8 in der gewünschten Lage an der Stange 22 feststellbar. Am Support 8 ist eine elektronische Meß- und Anzeigeeinheit 26 befestigt, mit der die Relativstellung des Supports 8 in bezug auf die Stange 22 beispielsweise mit Hilfe eines entlang der Stange angebrachten magnetisch codierten Maßbandes und einem mit dem Support 8 verfahrbaren Sensor ermittelt wird und der Wert des Abstandes der Anschlagleiste 18, 20 vom Werkzeug angezeigt wird. Die Meß- und Anzeigeeinheit 26 könnte alternativ unverfahrbar an einem Teil des Maschinengestells 2 angebracht sein.

Am Maschinengestell 2 sind in einer horizontalen Ebene ein erster Anschlag 28 und ein zweiter Anschlag 30 an einem Halter 32, der zwei im rechten Winkel zueinander angeordnete Schenkel aufweist, befestigt. Der erste Anschlag 28 ist in einem größeren Abstand vom Werkzeug angeordnet als der zweite Anschlag 30. Beide Anschläge sind einstellbar, d.h. der jeweilige Abstand vom Werkzeug kann verändert werden, indem die Anschläge aus einem Gewindebolzen bestehen, welcher in einem in dem Halter 32 vorgesehenen Innengewinde geschraubt ist und mit Hilfe einer Kontermutter festgestellt werden kann. Die Anschläge 28 und 30 dienen der Begrenzung der Annäherung des Supports 8 und somit der Anschlagschiene 4 beim Verfahren des Supports 8 in Richtung auf das Werkzeug, in dem ein Teil des Supports 8 mit einem der Anschläge 28 oder 30 zusammenwirkt.

Am Support 8 ist ein als Gegenanschlag zu den Anschlägen 28 und 30 wirkender beweglicher Riegel 34 um eine horizontale Achse frei drehbar gelagert. Der längliche Riegel 34 ist mit einer außermittigen Bohrung versehen, die von einem Teil eines an dem Support 8 angebrachten Bolzens 36 durchsetzt ist. In Abhängigkeit von der Lage der Anschlagschiene 4 wirkt einer der beiden Anschläge 28 und 30 mit dem Gegenanschlag am Support 8 zusammen. In der ersten Lage der Anschlagschiene nimmt der frei drehbare Riegel 34 eine erste Stellung ein, in der er so eingestellt ist, daß er mit dem vom Werkzeug weiter entfernten ersten Anschlag 28 zusammenwirkt, während er in der zweiten Lage der Anschlagschiene 4 eine zweite Stellung einnimmt, in der mit dem näher am Werkzeug angeordneten zweiten Anschlag 30 zusammenwirkt. In dem vorliegenden Ausführungsbeispiel wird dieses dadurch erreicht, daß der außermittig und frei drehbar gelagerte Riegel aufgrund der Schwerkraft in eine im wesentlichen vertikale Ausrichtung kommt, wenn die Anschlagschiene 4 in der zweiten Lage am Support 8 angebracht ist, weil der Riegel 34 teilweise in eine der T-förmigen Nuten 12 eintauchen kann. In dieser vertikalen Ausrichtung des Riegels 34 kommt dieser während einer Verschiebung des Supports 8 in Richtung auf das Werkzeug an dem ersten Anschlag 28 vorbei und kommt erst mit dem zweiten Anschlag 30 in Berührung, welcher seitlich verstaffelt gegenüber dem ersten Anschlag 28 angeordnet ist.

Ist die Anschlagschiene 4 in der ersten Lage am Support 8 befestigt, wird der Riegel 34 von der Anschlagschiene 4 verschwenkt und wirkt somit mit dem ersten Anschlag 28 zusammen, so daß er beim Verfahren des Supports 8 in Richtung auf das Werkzeug in einem größeren Abstand zum Werkzeug zur Anlage kommt, wodurch ein größerer Abstand des Supports 8 vom Werkzeug eingehalten wird.

Gemäß einer nicht abgebildeten Ausführungsform der vorliegenden Erfindung kann eine elektro-mechanischer Sensor, beispielsweise in Form eines mechanischen Tasters in Verbindung mit einem elektrischen Schalter, ein Signal zur Ermittlung der jeweils eingestellten Lage der Anschlagschiene 4 bereitstellen, welches über Leitungen an eine elektronische Steuereinrichtung geliefert wird, welche ihrerseits die Steuerung eines Elektromotors vornimmt, um in Abhängigkeit von der Lage der Anschlag-schiene 4 entweder den ersten oder zweiten Anschlag zu aktivieren, indem ein als Gegenanschlag am Support 8 gelagerter Riegel verfahren wird, welcher an die Welle des Elektromotors gekoppelt ist.

Gemäß einer weiteren Ausführungsform können die vom elektro-magnetischen Sensor die Lage der Anschlagschiene 4 kennzeichenden Signale an die elektronische Meß- und Anzeigeeinheit geliefert werden. Von dieser kann dann unter Berücksichtigung der Änderung des Abstandes der Anschlagleisten 18 und 20 bei Änderung der Lage der Anschlagschiene 4 der tatsächliche Abstandswert der jeweils aktivierten Anschlagleiste vom Werkzeug angezeigt werden, denn der Unterschied des Abstandes der Anschlagleiste 18 vom Support 8 von dem Abstand der Anschlagleiste 20 vom Support ist bekannt und kann in der Meß- und Anzeigeeinheit 26 gespeichert sein.

## Patentansprüche

1. Werkstück-Anlage für Werkzeugmaschinen, insbesondere Rechtsanschlag für Formatkreissägen mit schwenkbarem Sägeblatt, die eine parallel zu einer Werkzeugebene (6) angeordnete Anschlagschiene (4) aufweist, welche lösbar an einem quer zur Werkzeugebene (6) am Maschinengestell (2) verfahr- und feststellbaren Support (8) in einer von zwei zueinander um 90° um die Schienenlängsachse verschwenkten Lagen befestigbar ist,
wobei die Anschlagschiene (4) in einer ersten Lage dem Werkzeug eine Anschlagleiste (18) von geringerer Höhe und in einer zweiten Lage eine Anschlagleiste (20) von demgegenüber größerer Höhe zuwendet, und wobei ein erster Anschlag (28) am Maschinengestell (2) mit einem Gegenanschlag (34) am Support (8) zusammenwirkt, um die Annäherung des Supports (8) an das Werkzeug zu begrenzen,
dadurch gekennzeichnet, daß
am Maschinengestell (2) ein zweiter Anschlag (30) in anderem Abstand vom Werkzeug angeordnet ist und - daß die zwei Anschläge (28, 30) mit dem in Abhängigkeit von der Lage der Anschlagschiene (4) auf jeweils einen der Anschläge eingestellten Gegenanschlag (34) am Support (8) zusammenwirken.

2. Werkstück-Anlage nach Anspruch 1,
dadurch gekennzeichnet, daß der Gegenanschlag aus einem am Support (8) beweglich gelagerten Teil besteht, welches in der ersten Lage der Anschlagschiene (4) eine erste Lage einnimmt, in der es zum Zusammenwirken mit dem vom Werkzeug weiter entfernten Anschlag (28) eingestellt ist, während es in der zweiten Lage der Anschlagschiene (4) eine zweite Lage einnimmt, in der es mit dem anderen Anschlag (30) zusammenwirkt, der einen geringeren Abstand vom Werkzeug hat.

3. Werkstück-Anlage nach Anspruch 1, bei dem die Anschlagschiene (4) an zwei ihrer Seitenflächen T-förmige Nuten (12) zur Befestigung der Anschlagschiene (4) am Support (8) aufweist,
wobei
der Gegenanschlag ein länglicher Riegel (34) ist, der am Support (8) um eine horizontale Achse frei drehbar außermittig gelagert ist, und der in der zweiten Lage der Anschlagschiene aufgrund der Schwerkraft teilweise in eine der T-förmigen Nuten (12) derart eintaucht, daß er am weiter entfernten Anschlag (28) vorbei zum demgegenüber seitlich verstaffelt angeordneten Anschlag (30) gelangen kann, während der Riegel (34) in der ersten Lage der Anschlagschiene (4) von dieser in seine erste Lage verschwenkt ist, in der er mit dem weiter entfernten Anschlag (28) zusammenwirkt.

4. Werkstück-Anlage nach Anspruch 1,
gekennzeichnet durch einen elektro-mechanischen Sensor, der in Abhängigkeit von der Lage der Anschlagschiene (4) unterschiedliche Signale bereitstellt, welche verwendet werden, um den Gegenanschlag mit Hilfe eines Elektromotors zu verfahren, so daß einer der Anschläge aktiviert ist.

5. Werkstück-Anlage nach mindestens einem der vorherigen Ansprüche, mit einer elektronischen Meß- und Anzeigeeinheit, von der die Relativlage des Supports (8) in bezug auf das Maschinengestell (2) ermittelt und der Wert des Abstands der Anlageleiste (18, 20) vom Werkzeug angezeigt wird,
wobei
ein elektro-mechanischen Sensor entsprechend der jeweilige Lage der Anschlagschiene (4) unterschiedliche Signale bereitstellt und an die Meß- und Anzeigeeinheit liefert, von der unter Berücksichtigung einer Änderung des Abstandes der Anschlagleiste (18, 20) vom Support (8) bei Änderung der Lage der Anschlagschiene der tatsächliche Abstandswert der Anschlagleiste (18, 20) vom Werkzeug angezeigt wird.

6. Werkstück-Anlage nach mindestens einem der vorherigen Ansprüche,
dadurch gekennzeichnet, daß die Anschläge (28, 30) einstellbar sind.

## Claims

1. A work seat for machine tools, especially a righthand stop for sizing saws with swivelling saw blade, which has a stop rail (4) arranged parallel to a tool plane (6), which rail can be detachably fixed to a support (8), capable of being moved and clamped on the machine frame (2) transversely to the tool plane (6), in one of two positions swivelled at 90° to one another about the rail longitudinal axis,
the stop rail (4) in a first position turning a stop bar (18) of lower height and in a second position a stop bar (20) of greater height towards the tool, and a first stop (28) on the machine frame (2) interacting with an opposing stop (34) on the support (8) in order to limit the approach of the support (8) to the tool,
characterised in that
on the machine frame (2) a second stop (30) is arranged at another distance from the tool and that the two stops (28, 30) interact with the opposing stop (34) an the support (8), adjusted to either of the stops respectively as a function of the position of the stop rail (4).

2. A work seat as claimed in claim 1,
characterised in that the opposing stop comprises a part movably mounted on the support (8), which part in the first position of the stop rail (4) assumes a first position in which it is set to interact with the stop (28) further removed from the tool, whilst in the second position of the stop rail (4) it assumes a second position in which it interacts with the other stop (30), which is at a smaller distance from the tool.

3. A work seat as claimed in claim 1, in which the stop rail (4) on two of its lateral faces has T-shaped slots (12) for fixing the stop rail (4) to the support (8),
the opposing stop being an elongated bolt (34), which is eccentrically mounted an the support (8) so that it is free to rotate about a horizontal axis, and which in the second position of the stop rail partially immerses in one of the T-shaped slots (12) under the force of gravity in such a way that it can move past the more distant stop (28) to the stop (30), laterally staggered in relation thereto, whilst the bolt (34) in the first position of the stop rail (4) is swivelled from this into its first position in which it interacts with the more distant stop (28).

4. A work seat as claimed in claim 1,
characterised by an electro-mechanical sensor, which supplies different signals as a function of the position of the stop rail (4), which are used in order to traverse the opposing stop by means of an electric motor, so that one of the stops is activated.

5. A work seat according to at least one of the preceding claims, with an electronic measuring and display unit, which determines the position of the support (8) in relation to the machine frame (2) and displays the value for the distance of the stop bar (18, 20) from the tool,
an electro-mechanical sensor supplying different signals according to the respective position of the stop rail (4) and delivering these to the measuring and display unit, which displays the actual distance of the stop bar (18, 20) from the tool, taking into account a variation of the distance of the stop bar (18, 20) from the support (8) when the position of the stop rail varies.

6. A work seat as claimed in at least one of the preceding claims, characterised in that the stops (28, 30) are adjustable.

## Revendications

1. Agencement de pièce à usiner, pour des machines-outils, en particulier une butée de droite pour des scies circulaires de mise à format et comportant une lame de scie orientable, présentant une barre de butée (4) qui est agencée parallèlement à un plan d'outil (6) et qui peut être fixée de façon détachable, dans une parmi deux positions pivotées de 90° l'une par rapport à l'autre autour de l'axe longitudinal de la barre, à un support (8) pouvant être déplacé sur un bâti de machine (2), et fixé à celui-ci, transversalement au plan d'outil (6),
dans lequel la barre de butée (4) présente à l'outil, dans une première position, une latte de butée (18) de hauteur inférieure et, dans une seconde position, une latte de butée (20) de hauteur par contre supérieure, et dans lequel une première butée (28) sur le bâti de machine (2) coopère avec une butée opposée (34) du support (8) afin de limiter l'approche du support (8) vers l'outil,
caractérisé en ce que, sur le bâti de machine (2), une seconde butée (30) est agencée à une autre distance de l'outil et en ce que les deux butées (28, 30) coopèrent avec la butée opposée (38), sur le support (8), réglée sur chaque fois une des butées en fonction de la position de la barre de butée (4).

2. Agencement de pièce à usiner suivant la revendication 1, caractérisé en ce que la butée opposée est constituée par un élément qui est monté de façon mobile sur le support (8) et qui prend, dans la première position de la barre de butée (4), une première position dans laquelle il est réglé pour coopérer avec la butée (28) éloignée davantage de l'outil tandis qu'il prend, dans la seconde position de la barre de butée (4), une seconde position dans laquelle il coopère avec l'autre butée (30) qui a une distance inférieure par rapport à l'outil.

3. Agencement de pièce à usiner suivant la revendication 1, dans le cas duquel la barre de butée (4) présente sur deux de ses faces latérales des rainures (12) en forme de T pour la fixation de la barre de butée (4), la butée opposée étant un verrou allongé (34) qui est monté sur le support (8) de façon décentrée de manière à pouvoir tourner librement autour d'un axe horizontal et qui, dans la seconde position de la barre de butée, plonge partiellement dans une des rainures en forme de T (12), en raison de la force de gravité, de façon qu'en passant devant le butée (28) éloignée davantage, il puisse parvenir jusqu'à la butée (30) agencée par contre de façon latéralement étagée, tandis que le verrou (34) est pivoté, dans la première position de la barre de butée (4), depuis celle-ci jusqu'à dans sa première position dans laquelle il coopère avec la butée (28) éloignée davantage.

4. Agencement de pièce à usiner suivant la revendication 1, caractérisé par un capteur électromécanique qui, en fonction de la position de la barre de butée (4), met à disposition différents signaux qui sont utilisés afin de déplacer la butée opposée à l'aide d'un moteur électrique de façon qu'une des butées soit activée.

5. Agencement de pièce à usiner suivant l'une au moins des revendications précédentes, comportant un ensemble électronique de mesure et d'affichage par lequel la position relative du support (8) est détectée par rapport au bâti de machine (2) et la valeur de la distance de la latte de butée (18, 20) par rapport à l'outil est affichée,
un capteur électromécanique mettant à la disposition, conformément à la position respective de la barre de butée (4), des signaux différents et les fournissant à l'ensemble de mesure et d'affichage par lequel est affichée, en prenant en considération une modification de la distance de la latte de butée (18, 20) par rapport au support (8) lors d'une modification de la position de la barre de butée, la valeur de distance réelle de la latte de butée (18, 20) par rapport à l'outil.

6. Agencement de pièce à usiner suivant l'une au moins des revendications précédentes, caractérisé en ce que les butées (28, 30) sont réglables.
